Europäisches Patentamt

European Patent Office

Office européen des brevets

(11) Publication number: **0 406 153 A1**

# EUROPEAN PATENT APPLICATION

(21) Application number: 90610044.1

(22) Date of filing: 29.06.90

(51) Int. Cl.⁵: **B23B 39/16**

(30) Priority: **29.06.89 DK 3255/89**

(43) Date of publication of application:
**02.01.91 Bulletin 91/01**

(84) Designated Contracting States:
**AT BE CH DE ES FR GB GR IT LI NL SE**

(71) Applicant: **Nykjaer, Henrik**
**Groftager 99**
**DK-5750 Ringe(DK)**

(72) Inventor: **Nykjaer, Niels Preben Girich**
**Sogardsvej 23**
**DK-5750 Ringe(DK)**

(74) Representative: **Larsen, Hans Ole et al**
**Larsen & Birkeholm ApS Europaeisk**
**Patentbureau P.O. Box 200200**
**DK-2630 Taastrup(DK)**

(54) Guiding device for tools.

(57) The guiding device (1) according to the invention differs from known devices by moving only the most necessary parts, namely the nut (12), the rear bridge (11), the two slide shafts (19) and the front bridge (22) on which the tool (2) can be mounted.

The mass of movable parts is hereby reduced to a minimum, whereby the speed of reciprocation can be increased without this demanding more strength and herewith weight in the force-absorbing parts.

Furthermore, a hitherto unknown good stability is achieved for the reason that the slide shafts (19) and the front and rear bridges (11, 22) constitute a rigid frame in all positions of the drive spindle (8, 9), so that the tool (2) can function with high precision.

Fig.1

# GUIDING DEVICE FOR TOOLS

The invention relates to a guiding device, particularly for the guiding of tools in controlled machine tools, and comprising a housing with a through-going and longitudinally movable drive spindle for the rotation of the tool, and a drive unit comprising a nut in engagement with a spindle axle which is suspended in the housing and which is rotated during operation for the feeding forwards and backwards of the tool.

Devices of this kind are used mainly for the guiding of tools, such as drills, in computer-controlled machines, where a motor moves the tool towards and away from the item being machined.

However, hitherto-known devices of this kind have certain drawbacks which place special demands on the construction of the machine. This is due to the large masses of which the drive unit consists, and which at high rates of movement and frequency must be brought into movement and braked, which requires a particularly robust construction in order to avoid adverse influences. Similarly, demands are placed on those moments which are necessary for achieving of the desired frequency between the individual manoeuvres.

An example of such a construction is known from FR PS no. 1,526,172, where the movable mass also comprises the drive motor as a part of the drive unit which must be moved as a whole forwards and backwards during operation. Consequently, since an all too strong construction and moment is to be avoided, the speed has to be adjusted to suit the relatively large movable mass.

It is known from German publication no. 2,010,460 to limit the movable parts to comprise only a longitudinally-movable drive shaft for the tool, and a tubular bearing housing extending around it, which by means of a motor can be moved in relation to the housing and hereby move the tool. However, this construction suffers from the serious disadvantage that it not only comprises a relatively large movable mass consisting of bearing housing with bearings plus drive shaft and tool, but also that this as a whole is not very stable, especially in its extended position, whereby the apparatus will lack rigidity.

It is the object of the invention to overcome these drawbacks and disadvantages by reducing the movable mass as much as possible while at the same time ensuring the greatest possible rigidity, and this is achieved according to the invention by having the nut secured to a rear bridge which also serves to secure two slide-shafts which are suspended in the housing and which extend parallel with the drive shaft, and which at the slide-shafts' opposite ends beyond the housing are fastened to a front bridge on which the tool can be mounted.

The movable masses in the device are hereby limited in a surprisingly simple manner to comprise only a nut, a rear bridge and a front bridge and two intermediate shafts or journals. This permits a hitherto unknown high speed of movement without the need for great starting and braking moments, also a correspon dingly short reaction time and hereby high working frequency. Furthermore, the machine can be simplified to a hitherto-unknown degree, in that the moments of inertia are considerably lower than those hitherto known. This is achieved while at the same time ensuring that the tool has very great rigidity, in that together the front bridge, the slide shafts and the rear bridge constitute a stiff frame in which the drive shaft extends, said frame supporting the tool in all of its positions. There is thus achieved the greatest possible precision, the reason being that the frame will constitute a very stable suspension for the tool during the whole of the machining process.

This construction makes possible a production improvement which in most cases exceeds those improvements which tool constructions, cutting characteristics and control characteristics have been subject to in the furtherance of the productivity.

Moreover, the construction enables a considerable reduction in the weight, and the space requirements are correspondingly reduced. All in all, an extraordinary improvement of the guiding device has been achieved completely without disadvantages or costs in connection with the manufacture or the operation.

As disclosed in claim 2, a rapid movement transfer with low friction and a high degree of precision can be ensured by using a ball-nut and spindle.

The invention will now be described in closer detail with reference to the drawing, where

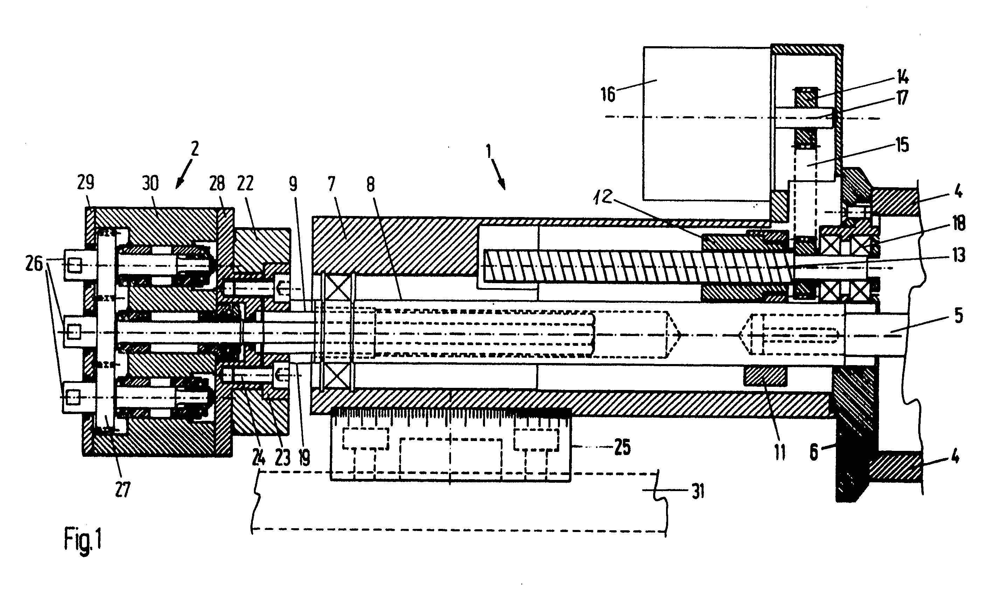

fig. 1 shows a vertical section through a guiding device in its retracted position, and

fig. 2 shows a horizontal section through the guiding device in its forward position.

In the drawing is shown an example of a preferred embodiment of the guiding device 1, on which there is mounted a multi-spindle drilling head 2.

The guiding device 1 is built up in a housing 7 in such a manner that the underside of the housing can be secured to an adjustable clamping device 25 which is fastened to a bedplate 31.

The device 1 will thus be able to be turned in the desired direction for the tool, and is then secured by being locked by the clamping device 25.

At the one end of the housing 7, to the right in the drawing, it is secured to a flange 6, which can be the end-shield on an electric motor, the housing 4 and shaft 5 of which are indicated.

The motor shaft 5 is provided with a spring and connected with a groove in a shaft tube 8 in the housing 7, said shaft tube 8 having a bore at the opposite end in which a shaft 9 can be moved when the guiding device is activated.

The bore and the shaft 9 have the same polygonal cross-section, so that the torque can be transferred in all shaft lengths. Anteriorly, the shaft 8 is suspended in the housing 7 via the bearing 10.

Outside on the housing 7 there is further mounted a step-motor 16, which via belt wheel 14 on the output axle 17 rotates a further belt wheel 14 through a toothed wheel 15. This belt wheel 14 is secured at the end of a spindle axle 13 which is suspended in the housing 7 in two bearings 18, thus allowing the spindle 13 to rotate around an axis which is parallel with the telescopic shaft 8, 9.

On the spindle axle 13 there is screwed a ball-nut 12 which is fastened to a rear bridge 11 which extends inside the housing 7. When the spindle 13 is made to rotate by the step-motor 16, the nut 12 and herewith the rear bridge 11 will be moved forwards or backwards in the housing 7.

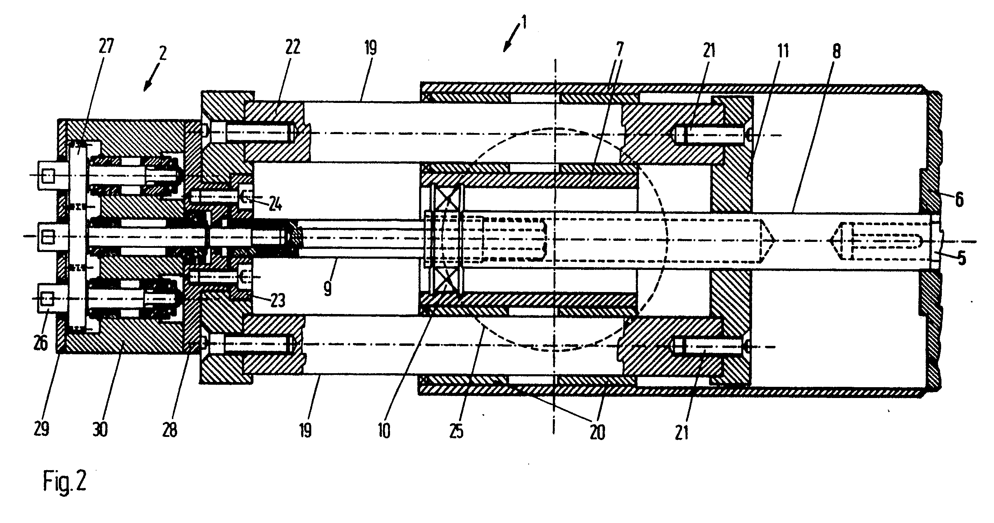

On the rear bridge 11 there are mounted two slide shafts or journals 19 which, as shown in fig. 2, are supported in bushes 20. At the end of these shafts 19 there is fastened a front bridge 22.

In this manner, the movable parts, namely the nut 12, the rear bridge 11, the slide shafts 19 and the front bridge 22, are the only parts of the device which are moved during operation, while at the same time they form a stable support for the tool 2, particularly for reason of the relatively large support surface which the slide shafts 19 have in the bearing bushes 20.

This provides hitherto unknown good conditions for a high rate of reciprocation, and the acceleration and deceleration forces are correspondingly reduced. The working speed can thus be increased without any need for large static constructions and a high power requirement.

As already mentioned, in the example shown the guiding device is provided with a multi-spindle drilling head 2. This drilling head is secured to the front bridge 22 by means of a clamp 23 which extends around the shaft 9, and which is secured to the backplate 28 of the drilling head by means of a tension disk 24.

In this manner, the drilling head can be turned in relation to the shaft 9 and thus be adjusted angularly to suit requirements.

The central drilling spindle 26 is screwed into a threaded hole in the shaft 9, and when turned via the gear-wheel 27 inside the housing 30 will cause the co-operating spindles 26 to rotate.

The spindles 26 have self-regulating bearings, in that disk springs at the end of the one bearing shell ensure that the spring pressure always provides the desired bearing pressure, whereby wear and inaccuracies can be absorbed automatically during operation. This reduces the need for replacements and thus provides the possibility of better utilization of the bearings. Furthermore, since the tolerance requirements are hereby not quite so great as otherwise, it simplifies both the bearing manufacture and the holding of stock.

## Claims

1. Guiding device, particularly for the guiding of tools in controlled machine tools, and comprising a housing with a through-going and longitudinally movable drive spindle for the rotation of the tool, and a drive unit comprising a nut in engagement with a spindle axle which is suspended in the housing and which is rotated during operation for the feeding forwards and backwards of the tool, **characterized** in that the nut (12) is fastened to a rear bridge (11) which also serves to secure two slide shafts (19) supported in bearings in the housing (7) and which extend parallel with the drive spindle (8, 9), and which at the opposite ends of the slide shafts beyond the housing (7) are secured to a front bridge (22) on which the tool (2) can be mounted.

2. Guiding device according to claim 1, **characterized** in that the nut (12) is a ball nut, and in that the axle (13) is a ball-spindle.

Fig.1

EP 0 406 153 A1

Fig. 2

EP 0 406 153 A1

| | DOCUMENTS CONSIDERED TO BE RELEVANT | | EP 90610044.1 |
| --- | --- | --- | --- |

| Category | Citation of document with indication, where appropriate, of relevant passages | Relevant to claim | CLASSIFICATION OF THE APPLICATION (Int Cl⁵) |
| --- | --- | --- | --- |
| Y | <u>DE - A1 - 3 300 734</u><br>(DEUTSCHE INDUSTRIE ANL.)<br>  * Claims 4,5; fig. 3 * | 1,2 | B 23 B 39/16 |
| Y | <u>US - A - 3 955 629</u><br>(TURNER)<br>  * Claim 1; fig. 1,3 * | 1,2 | |
| Y | <u>DE - A1 - 3 118 515</u><br>(PRIESS, HORST MANN)<br>  * Claims 1,8; fig. 1,2 * | 1 | |
| D,Y | <u>FR - A - 1 526 172</u><br>(FOURT)<br>  * Fig. 1,3; totality * | 1 | |
| A | <u>GB - A - 967 019</u><br>(HALHEAD)<br>  * Fig. 1,2 * | 1 | |

| TECHNICAL FIELDS SEARCHED (Int Cl⁵) |
| --- |
| B 23 B 39/00<br>B 23 B 47/00<br>B 23 Q  5/00 |

The present search report has been drawn up for all claims

| Place of search | Date of completion of the search | Examiner |
| --- | --- | --- |
| VIENNA | 26-09-1990 | RIEDER |